# EUROPEAN PATENT APPLICATION

(11) **EP 4 484 264 A1**
(43) Date of publication of application: **01.01.2025**
(21) Application number: 23182906.0
(22) Date of filing: 30.06.2023
(51) Int. Cl.: B62D 35/02, B62D 29/00

(54) **UNDER-SHIELD STRUCTURE AND MANUFACTURING METHOD**

(71) Applicant: Ford Global Technologies, LLC, Dearborn, MI 48126 (US)
(72) Inventor: SYKES, Matt, Wickford, SS12 9QB (GB); SMITH, Kristian, Edward, Basildon, SS15 5QG (GB); CHARTERS, Daniel, Hullbridge, SS5 6EG (GB); PANAINTE, Theodor, George, Laindon, SS16 6AU (GB); BLOUNT, Martin, Sevenoaks, TN14 5ED (GB); BENNEY, Richard, Alan, South Ockendon, RM15 6PH (GB)
(74) Representative: Haley Guiliano International LLP

(57) **Abstract**

The present disclosure relates to a vehicle, an under-shield structure and a method for manufacturing the under-shield structure. The under-shield structure comprises at least one support beam and a panel over-moulded on the at least one support beam. The panel further comprises a base plate and at least one reinforcement structure protruding vertically from the base plate. Thereby reducing the fluttering, noise, vibration, and harshness at high vehicle speed and increasing the overall stiffness of the under-shield structure.

## Description

### TECHNICAL FIELD

The present disclosure relates to an under-vehicle enclosure, and more particularly to an under-shield structure and related manufacturing method thereof.

### BACKGROUND

The field of transportation has undergone significant advancements in recent years, with conventional vehicles and electric vehicles (EVs) playing prominent roles. One factor to consider in switching from a conventional vehicle to an EV is the range of the EV. Thus, two factors to consider are vehicle mass and vehicle aerodynamics, which have a direct impact range.

In one appraoch, an under-vehicle enclosure or under-shield structure is provided on a bottom part of a vehicle, e.g., below an engine or battery pack. The air that flows under the vehicle while driving, flows along the under-vehicle enclosure, thereby impacting the aerodynamic performance of the vehicle. Several advancements have been proposed in under-vehicle enclosures to overcome the above-stated difficulties, including lightweight materials, reinforcement structures, and aerodynamics.

The use of an under-shield is evident in many vehciles to reduce drag and an under-shield may be typically made of carpet or composite plastic to reduce overall weight. Howver, due to a lack of stiffness, a lightweight shield may have suboptimal noise, vibration, and harshness (NVH) characteristics. Therefore, there is a need for an under-shield structure that enhances the aerodynamic efficiency and range, while optimising the NVH characteristics of a vehicle.

### SUMMARY

An object of the present disclosure is to provide an under-shield structure to increase aerodynamic efficiency, hence, improving the range of vehicles, such as EVs.

Another object of the present disclosure is to provide an under-shield structure to reduce manufacturing complexity and cost of vehciles.

Another object is to provide an under-shield structure that improves the workability of recurring maintenance operations, reducing cost assocoated the maintenance of vehicles.

Another object of the present disclosure is to provide an under-shield structure to reduce the NVH characteristics of vehicles, such as EVs.

Another object of the present disclosure is to provide an under-shield structure to meet vehicle dynamics and durability requirements.

According to an aspect of the present disclosure, an under-shield structure is provided. The under-shield structure comprises at least one support beam and a panel. The panel is over-moulded on the at least one support beam. The under-shield structure may be configured to attach to an underside of a vehicle, e.g., an EV.

In some examples, the at least one support beam is arranged along an x-axis of the vehicle.

In some examples, the at least one support beam is arranged along a z-axis of the vehicle.

In some examples, the at least one support beam arranged along the x-axis of the vehicle and the at least one support beam arranged along the z-axis of the vehicle are further arranged in an intersecting configuration.

In some examples, the at least one support beam is fastened to the vehicle using at least one of a rivet arrangement, bolt arrangement, wielding, and/or a combination thereof.

In some examples, the under-shield structure is a unitary/integral structure comprising the at least one support beam and the panel.

In some examples, the under-shield structure is an aerodynamic under-shield structure. For example, the under-shield structure may comprise an aerodynamic surface configured to enhance the aerodynamics of the vehicle. The aerodynamic under-shield structure may be configured to improve the vehicle range and/or reduce fuel consumption and vehicle emissions.

In some examples, the panel further comprises a base plate and at least one reinforcement structure. The base plate may further comprise an inner surface and an outer surface. The at least one reinforcement structure may protrude along a y-axis from the inner surface of the base plate. The outer surface of the base plate may comprise an aerodynamic surface, e.g., a smooth and/or flat surface.

In some examples, the at least one reinforcement structure is arranged along an x-axis of the base plate.

In some examples, the at least one reinforcement structure is arranged along a z-axis of the base plate.

In some examples, the, e.g., first, under-shield structure comprises one or more openings, e.g., in the panel, which may be referred to as a primary panel. A first opening may be configured to receive another, e.g., second, under-shield structure. The second under-shield structure may be an under-shield structure of a component of the vehicle, such as a motor. In some examples, the second under-shield structure comprises aerodynamic surface configured to enhance the aerodynamics of the vehicle. In some examples, the aerodynamic surface of the first under-shield structure may be configured to be (substantially) contiguous with the aerodynamic surface of the second under-shield structure, e.g., in an installed configuration, accounting for assembly tolerances and the like.

In some examples, the under-shield structure may comprise one or more secondary panels configured to cover an opening in the panel. The one or more secondary panels may be moveably and/or removably secured to the primary panel. In some examples, an opening of the primary panel may be positioned to allow access to another vehicle component, e.g., when the secondary panel is not covering the opening.

According to another aspect of the present disclosure, an under-shield assembly is provided. The under-shield assembly comprises a first under-shield structure and a second under-shield structure. The first under-shield structure comprises at least one support beam and a panel. The panel is over-moulded on the at least one support beam. The first under-shield structure may comprise an aerodynamic surface configured to be (substantially) contiguous with an aerodynamic surface of the second under-shield structure, e.g., in an installed configuration, accounting for assembly tolerances and the like. In some examples, a panel of the first under-shield structure may comprise one or more openings to receive a panel of the second under-shield structure. The first and second under-shield structures may cooperate to provide an aerodynamic surface.

According to another aspect of the present disclosure, a vehicle comprising an under-shield structure is provided. The under-shield structure comprises at least one support beam and a panel. The panel is over-moulded on the at least one support beam. The under-shield structure may be secured to the vehicle by virtue of attachment between the at least one support beam and a fixing point of the vehicle, such as a fixing point on a vehicle chassis and/or other structural component of the vehicle.

In some examples, the present disclosure provides a method of manufacturing an under-shield structure of a vehicle. The method comprises the steps of: a) providing at least one support beam, e.g., using a stamping process; and b) over-moulding a panel on the at least one support beam, thereby defining the under-shield structure.

In some examples, the under-shield structure, e.g., the panel of the under-shield structure, is made up of a composite material.

In some examples, the stamping includes metal stamping or plastic stamping.

In some examples, the over-moulding further includes but is not limited to injection moulding, two-color moulding, insert moulding or two-short moulding.

In some examples, the over-moulding comprises at least one of plastic over plastic, plastic over metal, elastomer over plastic, or elastomer over metal over-moulding.

### BRIEF DESCRIPTION OF THE DRAWINGS

Various aspects, as well as embodiments or examples of the present disclosure, are better understood by referring to the following detailed description. To better understand the disclosure, the detailed description should be read in conjunction with the drawings.
FIG. 1(a) is an illustration of an underside of a conventional vehicle.
FIG. 1(b) is a detailed illustration of an under-shield shown in FIG. 1(a).
FIG. 2 is an illustration of a vehicle subframe positioned behind an under-shield of a conventional vehicle.
FIG. 3 is a schematic illustration of a vehicle equipped with an under-shield structure in accordance with an example of the present disclosure.
FIG. 4 is an illustration of an under-shield structure fixed underneath a vehicle in accordance with an example of the present disclosure.
FIGS. 5(a) and 5(b) are detailed illustrations of an under-shield structure with a support beam in accordance with an example of the present disclosure.
FIGS. 5(c) and 5(d) are magnified illustrations of an under-shield structure in accordance with an example of the present disclosure.
FIG. 6 illustrates a method of manufacturing an under-shield structure in accordance with an exemplary embodiment of the present disclosure.

### DETAILED DESCRIPTION

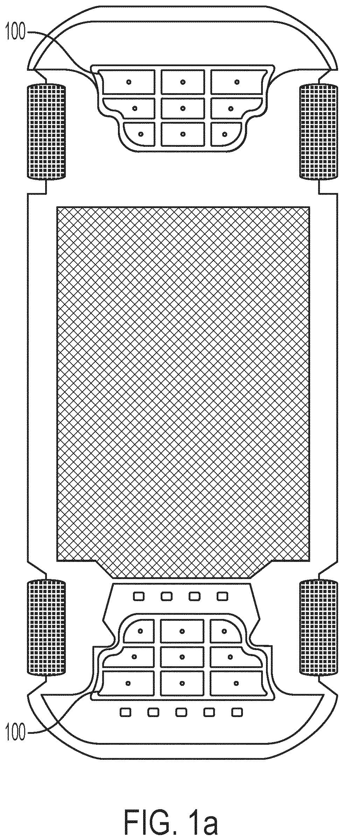

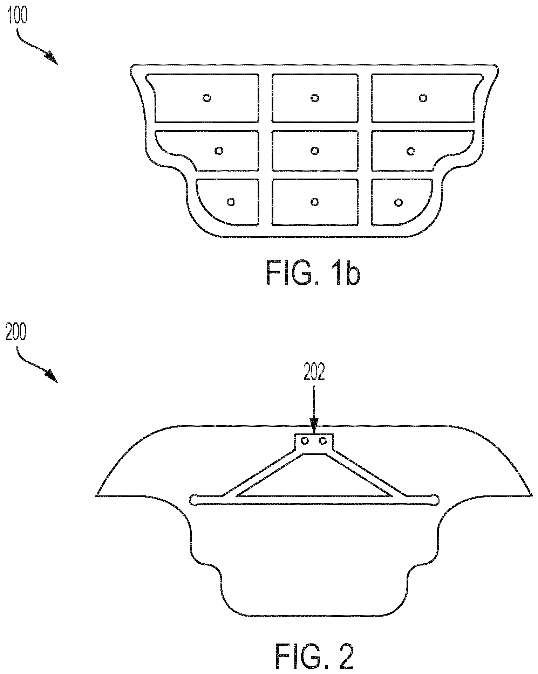

FIG. 1(a) an illustration of an underside of a vehicle. FIG. 1(b) is an illustration of a conventional under-shield 100 attached to the vehicle shown in FIG. 1(a). The under-shield 100 is fixed on the bottom part of a vehicle. The under-shield 100 may be made up of plastic or carpet to reduce the overall weight. However, such a lightweight sheet may impact on the NVH characteristics of the vehicle.

FIG. 2 is an illustration of a vehicle subframe 202 positioned behind an under-shield of a conventional vehicle. For example, the vehicle subframe 202 may be reinforcement brace for adding stiffness to the vehicle, e.g., to improve a driving characteristic of the vehicle. The use of such a vehicle subframe 202 is common in the automotive industry. However, including such structures can add mass to the vehicle, which may impact a maximum range of a vehicle.

A new under-shield structure is proposed for improving the NVH characteristics and/or the range of a vehicle.

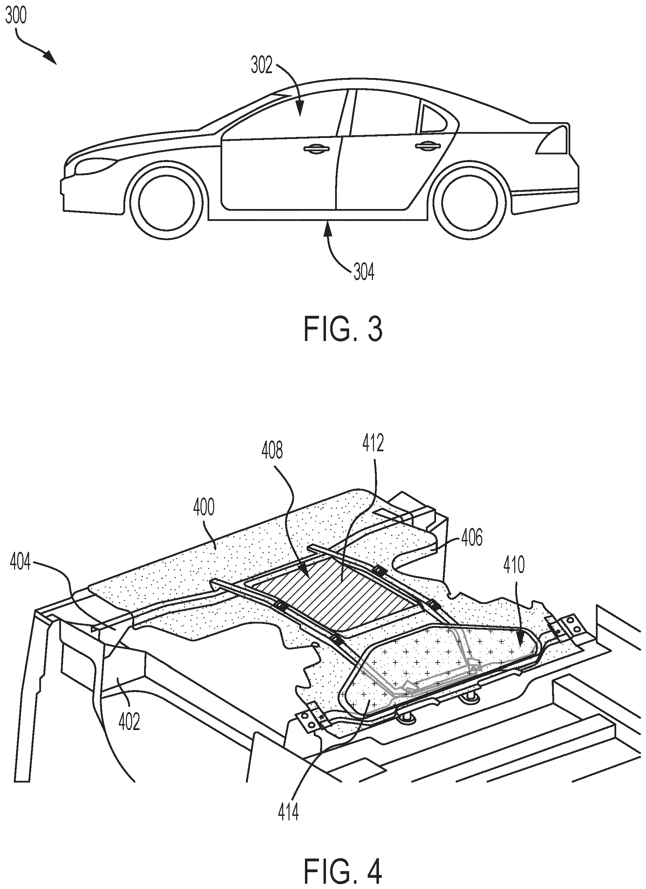

FIG. 3 is a schematic illustration of a vehicle 300 equipped with an under-shield structure 304 in accordance with an example of the present disclosure. A passenger compartment 302, and the under-shield structure 304 form a body part of the vehicle 300. The under-shield structure 304 encloses vehicle components, such as the powertrain or battery pack of the vehicle 300. While the vehicle 300 illustrated in FIG. 3 is shown as an automobile, such as a hybrid electric vehicle (HEV) or a battery electric vehicle (BEV), the present disclosure may extend, where technically possible, to use on any appropriate type of vehicle, such as a motorcycle, a marine vessel, or an aircraft.

FIG. 4 is an illustration of an under-shield structure 400 fixed underneath a vehicle 402 in accordance with an example of the present disclosure. The under-shield structure 400 includes at least one support beam 404 and a panel 406.

The at least one support beam 404 is fastened to the vehicle 402 using at least one of a rivet arrangement, bolt arrangement, welding, and/or a combination thereof. The shape of the at least one support beam 404 includes at least one of a U-shaped cross section, box-shaped cross section, tubular-shaped cross section, and/or a combination thereof. In the example shown in FIG. 4, the support beam 404 is secured to a body portion of the vehicle 402. However, the support beam 404 may be secured to any appropriate portion of the vehicle, such as a chassis, a subframe, a suspension component, a power train component, etc.

The panel 406 is over-moulded on the at least one support beam 404, thereby defining the under-shield structure 400. When the under-shield structure 400 is attached to the vehicle 402 it helps prevent debris on the road, such as small rocks, nails, water, or dust from damaging the underside of the vehicle 402. This may be particularly beneficial for EVs, which typically house a battery and associated components beneath the battery 402. Therefore, the panel 406 shields the underneath components from debris in various driving conditions. When the under-shield structure 400 is secured to vehicle 402, the stiffness of the vehicle is increased, which improves a driving characteristic of the vehicle. Inclusion of under-shield structure 400 on a vehicle removes the need for additional reinforcement, such as vehicle subframe 202 shown in FIG. 2.

In some examples, the total mass of the under-shield structure 400 may be less than the total mass of vehicle subframe 202 and a conventional under-shield structure 400. As such, inclusion of under-shield structure 400 on a vehicle may reduce the overall mass of the vehicle and improve the driving range of the vehicle.

In the example shown in FIG. 4, the under-shield structure 400 is a unitary/integral structure comprising the at least one support beam 404 and the panel 406.

Alternatively, the under-shield structure 400 is a non-integral structure comprising the at least one support beam 404 and the panel 406. The at least one support beam 404 is fixedly arranged with the panel 406 using any one of a rivet arrangement, bolt arrangement, welding, and/or a combination thereof in the under-shield structure 400.

The under-shield structure 400 is an aerodynamic under-shield structure. The under-shield structure 400 enhances the aerodynamics of the vehicle 402. Thereby, improving vehicle range, lowering fuel consumption, and reducing vehicle emissions. For example, the panel 406 may comprise one or more aerodynamic surfaces and/or features, such as fins, configured to improve the aerodynamics of the vehicle 402, in use.

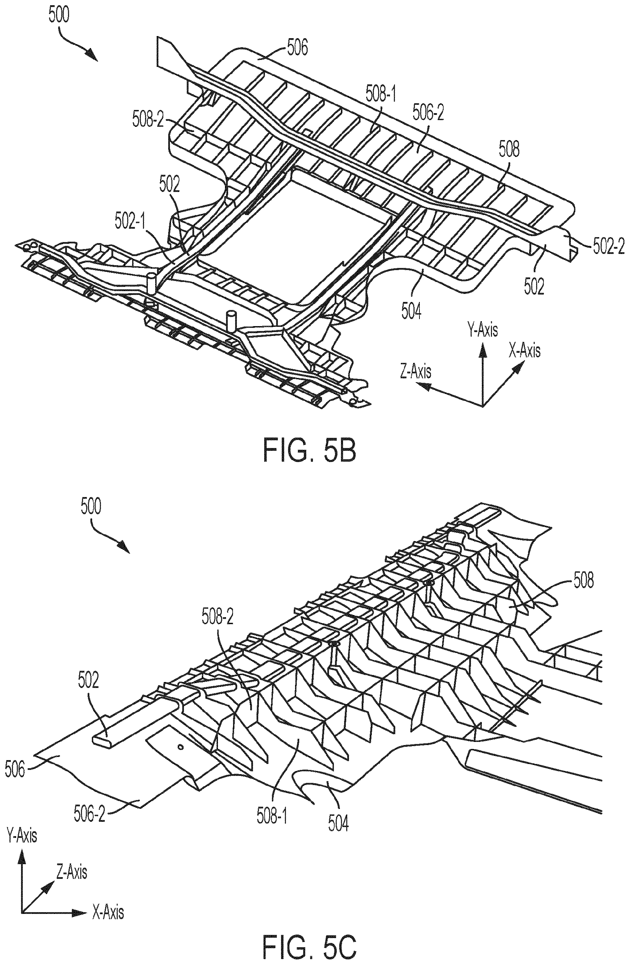

In the example shown in FIG. 4, the under-shield structure 400 comprises a plurality of openings in panel 406. For example, panel 406 comprises a first opening 408 and a second opening 410 (which are shown in more detail in FIG. 5B). In FIG. 4, the first opening 408 is configured, e.g., shaped and/or sized, to receive another vehicle component, such as another under-shield structure 412 of another vehicle component, e.g., so that the under-shield structure 412 is contiguous with opening 408. For example, under-shield structure 412 may comprise a panel that sits within opening 408 of panel 412 such that a continuous surface is across the underside of under-shield structure 400 and under-shield structure 412 (accounting for assembly tolerances, panel gaps, etc.).

The second opening 410 is covered by a secondary panel 414. The secondary panel 414 may be removeably secured to panel 406, e.g., by virtue of one or more fasteners, hinges, etc., so that when panel 414 no longer covers (or partially covers) opening 410, access is given to one or more components located behind panel 406, in an installed configuration on vehicle 402. In some examples, the panel 406 may be referred to as a primary panel, and panel 414 maybe referred to as a secondary panel. In some examples, panel 406 and 412 may be provided as part of a panel assembly.

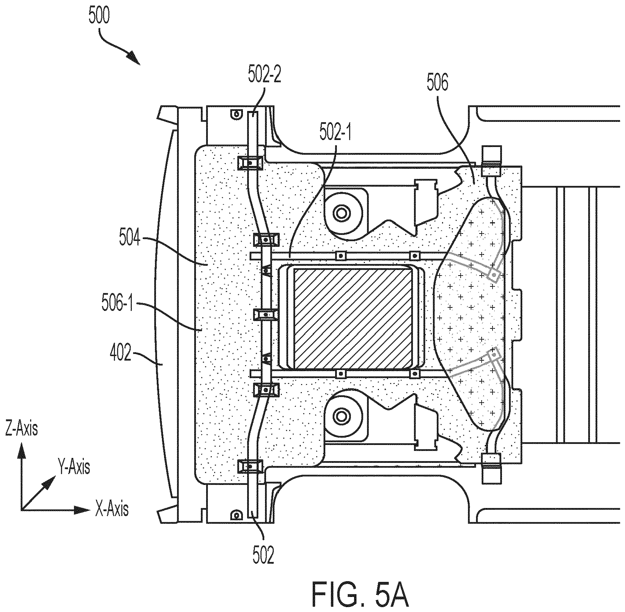

FIGS. 5(a) and 5(b) are detailed illustrations of an under-shield structure 500 with a support beam in accordance with an example of the present disclosure. The under-shield structure 500 comprises at least one support beam 502 and a panel 504.

FIG. 5(a) is a detailed illustration of the under-shield structure 500 fixed underneath vehicle 402. At least one support beam 502-1 is arranged along an x-axis of the vehicle 402. At least one support beam 502-2 is arranged along a z-axis of the vehicle 402. The at least one support beam 502-1 arranged along the x-axis and at least one support beam 502-2 arranged along the z-axis are further arranged in an intersecting configuration.

Additionally or alternatively, the at least one support beam 502 may be arranged diagonally or partially inclined at an angle from the x-axis of the vehicle 402 or partially inclined at an angle from the z-axis of the vehicle 402. For example, support beam 502-1 and 502-2 may be arranged in any appropriate configuration so as to sit within the package requirements of panel 506 and to engage suitable portions of vehicle 402 for securing the under-shield structure 500 to vehicle 402.

The at least one support beam 502 is fastened to the vehicle 402 using any appropriate assembly method, such as at least one of a rivet arrangement, bolt arrangement, welding, adhesive, and/or a combination thereof. The shape of the at least one support beam 502 includes at least one of a U-shaped cross section, a box-shaped cross section, a tubular-shaped cross section, and/or a combination thereof.

In one example, the at least one support beam 502 is formed using metal stamping. Thereby, reducing the overall manufacturing cost and complexity. The materials used for metal stamping include at least one of a steel, carbon steel, alloy steel, stainless steel, aluminum, iron, copper, brass, aluminum alloys, high-strength steel, and/or a combination thereof.

Alternatively, the at least one support beam 502 is formed using plastic stamping. The materials used for plastic stamping include at least one of a vulcanized fibre, laminates, thermoplastics, acetal, delrin, teflon, nylon, high or low-density polyethylene, engineering plastics, polyurethanes, polymers, and/or a combination thereof.

The panel 504 is over-moulded on the at least one support beam 502-1 arranged along the x-axis and/or at least one support beam 502-2 structured along the z-axis of the vehicle 402, thereby defining the under-shield structure 500. When the panel is over-moulded on the at least one support beam 502-1 and 502-2, the resultant under-shield structure 500 is stiffer than it otherwise would have been without the over-moulded support beams 502-1 and 502-2. This improves the NVH characteristics of the vehicle.

The panel 504 further comprises a base plate 506 and at least one reinforcement structure 508 (illustrated in FIG.5(b)). The base plate 506 comprises an outer surface 506-1 and an inner surface 506-2 (illustrated in FIG. 5(b)).

The outer surface 506-1 of the base plate 506 is a smooth and/or flat surface. The outer surface 506-1 of the base plate 506 is in direct contact with the airflow, while the under-shield structure 500 is in an assembled configuration with the vehicle 402. Hence, the smooth and/or flat outer surface 506-1 enables the base plate to be aerodynamically compliant.

FIG. 5(b) is a detailed illustration of the under-shield structure 500. As shown in FIG. 5(b), the at least one reinforcement structure 508 protrudes along a y-axis from the inner surface 506-2 of the base plate 506. The at least one reinforcement structure 508-1 is arranged along the x-axis of the base plate 506 and/or at least one reinforcement structure 508-2 is arranged along the z-axis of the base plate 506.

The at least one reinforcement structure 508-1 arranged along the x-axis of the base plate 506 and the at least one reinforcement structure 508-2 arranged along the z-axis of the base plate 506 are further arranged in an intersecting configuration. The intersecting configuration of the at least one reinforcement structure 508-1 and the at least one reinforcement structure 508-2 enhances the stiffness of the base plate 506. Thereby, reducing the overall weight and manufacturing cost.

Additionally or alternatively, the at least one reinforcement structure 508 may be arranged diagonally or partially inclined at an angle from the x-axis of the base plate 506 or partially inclined at an angle from the z-axis of the base plate 506.

The panel 504 is over-moulded on the at least one support beam 502-1 arranged along the x-axis and/or at least one support beam 502-2 arranged along the z-axis allows structural strengthening of the vehicle 402 (illustrated in Fig. 5(a)). The structural strengthening includes providing body rigidity for characteristics of the vehicle.

Additionally, the over-moulded panel 504 acts as a stiffener to the under-shield structure 500. Thereby, reducing the need to add additional ribbing to the under-shield structure 500. The stiffening of the under-shield structure 500 may reduce deflection of base plate 506, e.g., at high speed.

FIG. 5(c) is a magnified illustration of an under-shield structure 500 in accordance with an example of the present disclosure. The under-shield structure 500 comprises at least one support beam 502 and a panel 504. The panel 504, further comprises a base plate 506 and at least one reinforcement structure 508. The base plate 506 comprises an outer surface 506-1 (illustrated in Fig. 5(a)) and an inner surface 506-2. The at least one reinforcement structure 508 protrudes along the y-axis from the inner surface 506-2 of the base plate 506. The at least one reinforcement structure 508-1 is arranged along an x-axis of the base plate 506 and/or the at least one reinforcement structure 508-2 is arranged along a z-axis of the base plate 506. The at least one reinforcement structure 508-1 arranged along the x-axis of the base plate 506 and the at least one reinforcement structure 508-2 arranged along the z-axis of the base plate 506 are further arranged in an intersecting configuration.

The panel 504 is over-moulded on the at least one support beam 502 in a manner that the at least one support beam 502 is embedded in the at least one reinforcement structure 508 of the panel 504 to achieve a unitary/integral under-shield structure 500.

Additionally or alternatively, multiple reinforcement structures (similar to the at least one reinforcement structure 508-1) are arranged along the x-axis of the base plate 506. Similarly, multiple reinforcement structures (similar to the at least one reinforcement structure 508-2) are arranged along the z-axis of the base plate 506. The multiple reinforcement structures arranged along the x-axis and multiple reinforcement structures arranged along the z-axis are further arranged in an intersecting configuration to form a multi-slot arrangement. The multi-slot arrangement of the under-shield structure 500 enables better aerodynamic features with reduced underbody drag and fluttering of the base plate 506.

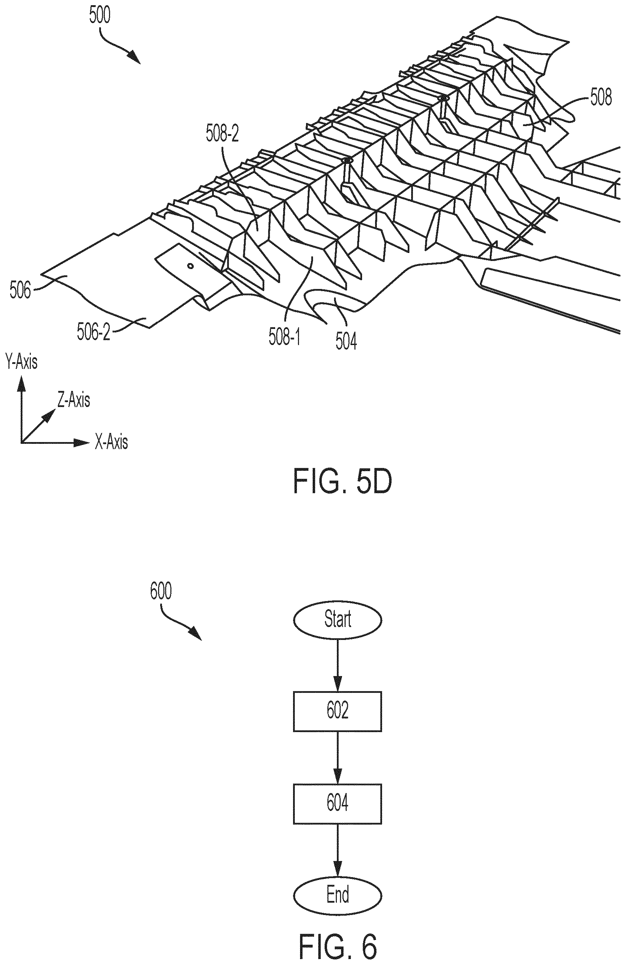

FIG. 5(d) is a magnified illustration of an under-shield structure 500 in accordance with an exemplary embodiment of the present disclosure. The under-shield structure 500 comprises a panel 504. The panel 504, further comprises a base plate 506 and at least one reinforcement structure 508. The base plate 506 comprises an outer surface 506-1 (shown in Fig. 5(a)) and an inner surface 506-2. The at least one reinforcement structure 508 protrudes along the y-axis from the inner surface 506-2 of the base plate 506. The at least one reinforcement structure 508-1 is arranged along an x-axis of the base plate 506 and/or the at least one reinforcement structure 508-2 is arranged along a z-axis of the base plate 506.

The panel 504 is fixedly arranged with at least one support beam 502 (illustrated in Fig. 5(c)) using at least one of a rivet arrangement, bolt arrangement, welding, adhesive, and/or a combination thereof in the under-shield structure 500. Thereby, achieving a non-integral under-shield structure 500.

The combination of the at least one reinforcement structure 508 and the at least one support beam 502 eliminates the need for additional mass, body-in-white (BIW) cross members, or welded-on/bolted reinforcement braces. Thereby reducing the fluttering, NVH at high vehicle speed and increasing the overall stiffness of the under-shield structure 500. This also reduces the manufacturing complexity of the under-shield structure 500.

FIG. 6 illustrates a method 600 of manufacturing an under-shield structure of a vehicle in accordance with an example of the present disclosure. The method 600 comprises the following steps: (a) forming 602 at least one support beam, e.g., using a stamping process, and (b) over-moulding 604 a panel on the at least one support beam.

The under-shield structure may be made up of a composite material or any other materials solving a similar purpose. The composite material comprises at least one of a thermoplastic polymer, metal, a fiber-reinforced composite, and a combination thereof.

The thermoplastic polymer includes at least one of a polyvinylchloride, polyethylene, polyester, polyetheretherketone, a polyurethane film, a thermoplastic polyurethane, and/or a combination thereof.

The metal includes at least one of a steel, carbon steel, alloy steel, stainless steel, aluminum, iron, copper, brass, aluminum alloys, or high-strength steel and/or a combination thereof.

The fiber-reinforced composite is composed of a high-strength fiber in a matrix material. The fiber-reinforced composite comprises at least one of a non-woven cellulosic bast fibers, non-woven polyester fibers, glass fibers, carbon fibers, and/or aramid fibers. Glass fibers are an alumina-lime-borosilicate based composition. Carbon fibers, also known as graphite fibers. The composition of the graphite fibers is based on poly acrylo nitrile, rayon, and/or petroleum pitch.

The composite materials of the present disclosure are capable of being welded to at least one of metal materials, identical composite materials, different composite materials, and/or a combination thereof. The composite materials are welded to other metal materials but are not limited to aluminum based metal matrix composites, magnesium alloys, copper-based composites, or titanium based composites.

In step 602, the at least one support beam is formed, e.g., using stamping. The stamping further includes metal stamping. Thereby, reducing the overall manufacturing cost and complexity. Further, materials used for metal stamping include at least one of a steel, carbon steel, alloy steel, stainless steel, aluminum, iron, copper, brass, aluminum alloys, or high-strength steel and/or a combination thereof.

Alternatively, the stamping includes plastic stamping. The materials used for plastic stamping include but are not limited to vulcanized fibre, laminates, thermoplastics, acetal, delrin, teflon, nylon, high or low-density polyethylene, engineering plastics, polyurethanes, polymers, and/or a combination thereof.

The at least one support beam provides body rigidity for improving NVH characteristics after connecting to the underside of the vehicle. In some examples, the at least one support beam may aid the suspension system to maintain stability or improve handling characteristics of the vehicle, and/or may support one or more other components of the vehicle.

In step 604, the panel is over-moulded on the at least one support beam. The panel formation using over-moulding reduces the manufacturing complexity and cost. Additionally, increasing the ability of the under-shield structure to absorb shock and vibration. The over-moulding includes but is not limited to injection moulding, two-color moulding, insert moulding or two-short moulding.

The over-moulding comprises at least one of a plastic over plastic, plastic over metal, elastomer over plastic, or elastomer over metal over-moulding.

In some examples, the under-shield structure 500 may be assembled to a vehicle in the following order. 1) provide vehicle body with motor components, battery components, and/or suspension components assembled to vehicle body. 2) Attach one or more second under-shield structures (e.g., panel 412 of FIG. 4) to vehicle body and/or vehicle components. For example, the second under-shield structure may be configured to shield one or more power distribution units of an EV from debris. 3) Attach the under-shield structure 500 to the vehicle. The under-shield structure 500 comprises multiple opening (e.g., openings 408 and 410). When the under-shield structure 500 is attached to the vehicle, an opening in a panel of under-shield structure 500 (e.g., see panel 412 received in opening 408) receives the second under-shield structure, which is attached to the vehicle. When the under-shield structure 500 is attached to the vehicle, a secondary panel is secures to the under-shield structure 500, e.g., so as to cover one or more of the openings (e.g., see secondary panel 414 covering opening 410). 4) The secondary panel is moved so as to uncover an opening of the under-shield structure 500, e.g., to provide access to one or more vehicle components behind the under-shield structure 500. For example, the secondary panel 414 may be removed to allow adjustment of a component provided on the vehicle body in step 1. 5) The secondary panel is replaced over the opening. In some examples, the secondary panel is removeably secured in place, e.g., using a fastener, or is permanently attached to the under-shield structure 500, e.g., using a welding operation, so as to restrict future access to the vehicle components behind under-shield structure 500.

The above stated descriptions are merely example implementations of this application but are not intended to limit the protection scope of this application. A person with ordinary skills in the art may recognize substantially equivalent structures or substantially equivalent acts to achieve the same results in the same manner or a dissimilar manner; the exemplary embodiment should not be interpreted as limiting the disclosure to one embodiment.

While aspects of the present disclosure have been described in detail with reference to the illustrated embodiments, those skilled in the art will recognize that many modifications may be made thereto without departing from the scope of the present disclosure. The present disclosure is not limited to the precise construction and compositions disclosed herein; any and all modifications, changes, and variations apparent from the foregoing descriptions are within the spirit and scope of the disclosure as defined in the appended claims. Moreover, the present concepts expressly include any and all combinations and subcombinations of the preceding elements and features.

The description is provided for clarification purposes and is not limiting. Words and phrases are to be accorded their ordinary, plain meaning, unless indicated otherwise.

## Claims

1. An under-shield structure of a vehicle comprises:
at least one support beam; and
a panel over-moulded on the at least one support beam.

2. The under-shield structure according to claim 1, wherein the at least one support beam is arranged along an x-axis of the vehicle, the at least one support beam is arranged along a z-axis of the vehicle, and wherein the at least one support beam arranged along the x-axis of the vehicle and at least one support beam arranged along the z-axis of the vehicle are further arranged in an intersecting configuration.

3. The under-shield structure according to claim 1 or 2, wherein the under-shield structure is an aerodynamic under-shield structure.

4. The under-shield structure according to any of the preceding claims, wherein the at least one support beam comprises at least one of a U-shaped cross section, box-shaped cross section, tubular-shaped cross section, and/or a combination thereof.

5. The under-shield structure according to any of the preceding claims, wherein the under-shield structure is a unitary structure comprising the at least one support beam and the panel.

6. The under-shield structure according to any of the preceding claims, wherein the panel further comprises:
a base plate having an inner surface and an outer surface; and
at least one reinforcement structure protruding along a y-axis from the inner surface of the base plate.

7. The under-shield structure according to claim 6, wherein the at least one reinforcement structure is arranged along an x-axis of the base plate.

8. The under-shield structure according to claim 6 or 7, wherein the at least one reinforcement structure is arranged along a z-axis of the base plate.

9. The under-shield structure according to any of the preceding claims, wherein the panel comprises an opening configured to receive a second under-shield structure, when the under-shield structure is attached to a vehicle.

10. The under-shield structure according to any of the preceding claims, wherein the panel comprises an opening configured to allow access to a vehicle component behind the under-shield structure when the under-shield structure is attached to a vehicle, the under-shield structure comprising one or more secondary panels removeably securable over the opening.

11. An under-shield assembly comprising the under-shield structure according to any of the preceding claims and a second under-shield structure, the first and second under-shield structures cooperating to provide an aerodynamic surface.

12. A vehicle comprising the under-shield structure according to any of the preceding claims.

13. A method of manufacturing an under-shield structure of a vehicle comprising:
providing at least one support beam; and
over-moulding a panel on the at least one support beam.

14. The method according to claim 13, wherein providing the the under-shield structure is manufactured up of a composite material.

15. The method according to claim 13 or 14, wherein the over-moulding further includes injection moulding, two-color moulding, insert moulding, or two-short moulding.
